# EUROPEAN PATENT APPLICATION

(11) **EP 2 028 393 A2**
(43) Date of publication of application: **25.02.2009**
(21) Application number: 08162833.1
(22) Date of filing: 22.08.2008
(51) Int. Cl.: F16G 3/10

(54) **Flexible imaging member belt seam smoothing process**

(30) Priority: 22.08.2007 US 895255
(71) Applicant: Xerox Corporation, Rochester, New York 14644 (US)
(72) Inventor: Herko, Jonathan, Walworth, NY 14568 (US); Martin, David W., Walworth, NY 14568 (US)
(74) Representative: Grünecker, Kinkeldey, Stockmair & Schwanhäusser Anwaltssozietät

(57) **Abstract**

Post treatment processes of an ultrasonically welded seamed flexible imaging member belt (38) for providing a smooth surface and substantially eliminating protrusions (42) by applying heat and/or pressure to an overlap region of the seam (40) to compress and reform the seam.

## Description

### BACKGROUND

The present embodiments relate generally to an improved seamed belt with a smooth seam, and processes for making the same. More specifically, embodiments relate to processes for post fabrication smoothing of an ultrasonically welded overlap seam of an intermediate transfer belt.

Electrophotographic printing is a well-known and commonly used method of copying or printing documents. Electrophotographic printing is performed by exposing a light image representation of a desired document onto a substantially uniformly charged photoreceptor. In response to that light image the photoreceptor discharges, creating an electrostatic latent image of the desired document on the photoreceptor's surface. Toner is then deposited onto that latent image, forming a toner image. The toner image is then transferred from the photoreceptor onto a receiving substrate such as a sheet of paper. The transferred toner image is then fused with the substrate, usually using heat and/or pressure. The surface of the photoreceptor is then cleaned of residual developing material and recharged in preparation for the production of another image.

The foregoing generally describes black and white electrophotographic printing machines. Electrophotographic printing can also produce color images by repeating the above process for each color of toner that is used to make the color image. For example, the photoreceptive surface may be exposed to a light image that represents a first color, say black. The resultant electrostatic latent image can then be developed with black toner particles to produce a black toner layer that is subsequently transferred onto a receiving substrate. The process can then be repeated or a second color, say yellow, then for a third color, say magenta, and finally for a fourth color, say cyan. When the toner layers are placed in superimposed registration the desired composite color toner image is formed and fused on the receiving substrate.

The color printing process described above superimposes the color toner layers directly onto a substrate. Other electrophotographic printing systems use intermediate transfer belts. In such systems successive toner layers are electrostatically transferred in superimposed registration from the photoreceptor onto an intermediate transfer belt. Only after the composite toner image is formed on the intermediate transfer belt is that image transferred and fused onto the substrate. Indeed, some electrophotographic printing systems use multiple intermediate transfer belts, transferring toner to and from belts as required to fulfill the requirements of the machine's overall architecture.

In operation, an intermediate transfer belt is brought into contact with a toner image-bearing member such as a photoreceptor belt. In the contact zone an electrostatic field generating device such as a corotron, a bias transfer roller, a bias blade, or the like creates electrostatic fields that transfer toner onto the intermediate transfer belt. Subsequently, the intermediate transfer belt is brought into contact with a receiver. A similar electrostatic field generating device then transfers toner from the intermediate transfer belt to the receiver. Depending on the system, a receiver can be another intermediate transfer member or a substrate onto which the toner will eventually be fixed. In either case the control of the electrostatic fields in and near the transfer zone is a significant factor in toner transfer.

Intermediate transfer belts often take the form of seamed belts fabricated by fastening two ends of a web material together, such as by welding, sewing, wiring, stapling, or gluing. While seamless intermediate transfer belts are possible, they require manufacturing processes that make them much more expensive than similar seamed intermediate transfer belts. This is particularly true when the intermediate transfer belt is long.

Seamed belts are fabricated from a sheet cut from an imaging member web. The sheets are generally rectangular or in the shape of a parallelogram where the seam does not form a right angle to the parallel sides of the sheet. All edges may be of the same length or one pair of parallel edges may be longer than the other pair of parallel edges. The sheets are formed into a belt by joining overlapping opposite marginal end regions of the sheet. A seam is typically produced in the overlapping marginal end regions at the point of joining. Joining may be effected by any suitable means. Typical joining techniques include welding (including ultrasonic), gluing, taping, pressure heat fusing, and the like. For example, puzzle-cut seams are disclosed in 1 Patent Nos. 5,487,707 , 6,318,223, and 6,440,515, which are hereby incorporated by reference in their entirety. A typical ultrasonic welding process is carried out by holding down the overlapped ends of a flexible imaging member sheet with vacuum against a flat anvil surface and guiding the flat end of an ultrasonic vibrating horn transversely across the width of the sheet, over and along the length of the overlapped ends, to form a welded seam.

Belts, sheets, films and the like are important to the xerographic process. Belt function is often significantly affected by the seam of the belt. For example, belts formed according to known butting or overlapping techniques provide a bump or other discontinuity in the belt surface leading to a height differential between adjacent portions of the belt, for example, of 0.010 inches or more depending on the belt thickness. This increased height differential leads to performance failure in many applications.

When ultrasonically welded into a belt, the seam of multilayered electrophotographic imaging flexible member belts may occasionally contain undesirable high protrusions such as peaks, ridges, spikes, and mounds. These seam protrusions present problems during image cycling of the belt machine because they interact with cleaning blades to cause blade wear and tear, which ultimately affect cleaning blade efficiency and service life.

A bump, surface irregularity, or other discontinuity in the seam of the belt may disturb the tuck of the cleaning blade as it makes intimate contact with the photoconductive member surface to effect residual toner and debris removal. The increased height differential may allow toner to pass under the cleaning blade and not be cleaned. Furthermore, seams having differential heights may, when subjected to repeated striking by cleaning blades, cause photoconductive member cycling speed disturbance which affects the crucial photoconductive belt motion quality. Moreover, seams with a bump or any morphological defects can cause the untransferred, residual toner to be trapped in the sites of seam surface irregularities. The seam of a photoreceptor belt which is repeatedly subjected to the striking action by a cleaning blade under machine functioning conditions has triggered the development of premature seam delamination failure. In addition, the discontinuity in belt thickness due to the presence of an excessive seam height yields variances of mechanical strength in the belt as well as reducing the fatigue flex life of the seam when cycling over the belt module support rollers. As a result, both the cleaning life of the blade and the overall service life of the photoreceptor belt can be greatly diminished.

Moreover, the protrusion high spots in the seam may also interfere with the operation of subsystems of copiers, printers and duplicators by damaging electrode wires used in development subsystems that position the wires parallel to and closely spaced from the outer imaging surface of belt photoreceptors. These closely spaced wires are employed to facilitate the formation of a toner powder cloud at a development zone adjacent to a toner donor roll and the imaging surface of the belt imaging member.

In addition, the copy quality of image printout can be degraded. Such irregularities in seam height provide vibrational noise in xerographic development which disturb the toner image on the belt and degrade resolution and transfer of the toner image to the final copy sheet. This is particularly prevalent in those applications requiring the application of multiple color layers of liquid or dry developer on a photoreceptor belt, which are subsequently transferred to a final copy sheet. Further, the seam discontinuity or bump in such a belt may result in inaccurate image registration during development, inaccurate belt tracking and overall deterioration of motion quality, as a result of the translating vibrations.

As such, there is a need for providing a seamed belt with an improved seam surface topology such that it can withstand greater dynamic fatigue conditions. For example, an improved belt having a seam which provides a smoother surface with substantially decreased or eliminated profile protrusions or irregularity would extend service life.

### SUMMARY

According to embodiments illustrated herein, there is provided a flexible belt that has an improved surface topology of its welded overlap seam while maintaining seam strength, and processes for making such flexible belts.

In particular, an embodiment provides a process for post treatment of an ultrasonically welded seamed flexible imaging member belt comprising providing a flexible belt having a welded seam extending from one parallel edge to the other parallel edge, the welded seam having a rough seam region comprising an overlap of two opposite edges, positioning the flexible belt on a lower anvil such that the flexible belt is held in position on the lower anvil by vacuum, contacting the rough seam region with a heat and pressure applying tool, and smoothing out the rough seam region with heat and pressure applied by the heat and pressure applying tool to produce a flexible belt having a smooth welded seam without removing seam material.

Embodiments also provide a process for post treatment of an ultrasonically welded seamed flexible imaging member belt comprising providing a flexible belt having a welded seam extending from one parallel edge to the other parallel edge, the welded seam having a rough seam region comprising an overlap of two opposite edges, positioning the flexible belt on a lower anvil such that the flexible belt is held in position on the lower anvil by vacuum, contacting the rough seam region with a heat and pressure applying tool, the heat and pressure applying tool being selected from the group consisting of an ultrasonic vibrating horn, an automated heated pressure roller and a heated upper anvil, and smoothing out the rough seam region with heat and pressure to produce a flexible belt having a smooth welded seam without removing seam material.
In a further embodiment of the process of claim 1, the heat and pressure applying tool is an ultrasonic vibrating horn.
In a further embodiment the lower anvil is a flat anvil.
In a further embodiment the smoothing out of the rough seam region is performed by making a second welding pass across the welded region such that the rough seam region is further compressed under high pressure and heat.
In a further embodiment the smoothing out of the rough seam region is performed by making a second welding pass across a back side of the welded region such that the rough seam region is further compressed under high pressure and heat.
In a further embodiment the flexible belt is selected from the group consisting of a photoreceptor, an electroreceptor, and an intermediate image transfer belt.
In a further embodiment the flexible belt consists of a single layer of substantially homogeneous material.
In a further embodiment the flexible belt comprises at least two different layers having different compositions or different properties.

Further embodiments provide ultrasonically welded seamed flexible imaging member belts formed by the processes described above.

### BRIEF DESCRIPTION OF THE DRAWINGS

For a better understanding of the present embodiments, reference may be had to the accompanying figures.

Figure 1 is a cross-sectional view of a multilayered flexible sheet of imaging material with opposite ends overlapped;

Figure 2 is a cross-sectional view of a multilayered seamed belt derived from the sheet of Figure 1 after ultrasonic seaming welding;

Figure 3 is a cross-sectional view of a seamed belt before being subjected to a post treatment smoothing process according to embodiments of the present disclosure;

Figure 4 is a three-dimensional comparison of an ultrasonically welded seam before (left) and after (right) being subjected to a post treatment smoothing process according to embodiments of the present disclosure;

Figure 5 is a three-dimensional comparison of an ultrasonically welded seam before (left) and after (right) being subjected to another post treatment smoothing process according to embodiments of the present disclosure;

Figure 6 is a graphical comparison of an ultrasonically welded seam before (left) and after (right) being subjected to yet another post treatment smoothing process according to embodiments of the present disclosure; and

Figure 7 is a cross-sectional view of an apparatus for use in smoothing an ultrasonically welded seam according to embodiments of the present disclosure.

### DETAILED DESCRIPTION

In the following description, it is understood that other embodiments may be utilized and structural and operational changes may be made without departure from the scope of the present embodiments disclosed herein.

The present embodiments relate to a seamed flexible belt with a smoothed seam such that the welded seam has a smoother surface topology to greatly improve both the cleaning life of the cleaning blade and the overall service life of the flexible belt. More specifically, embodiments relate to a post treatment process for efficiently and consistently smoothing an ultrasonically welded overlap seam of a flexible belt that does not degrade seam strength.

Typical electrostatographic flexible belt imaging members include, for example, photoreceptors for electrophotographic imaging systems, electroreceptors such as ionographic imaging members for electrographic imaging systems, and intermediate image transfer belts for transferring toner images in electrophotographic and electrographic imaging systems. Those the present embodiments can be used with fuser belts, pressure belts, intermediate transfer belts, transfuse belts, transport belts, developer belts, photoreceptor belts, and the like. The seamed belts are prepared using a process which forms a strength enhancing bond between voids of mutually mating elements. The strength enhancing bond comprises a material which is chemically and physically compatible with the material of the coating layers of the belt.

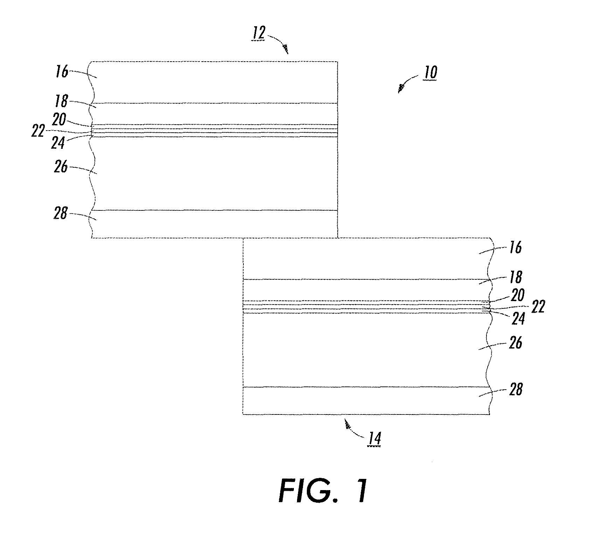

Referring to Figure 1, there is illustrated a flexible member 10 in the form of a sheet having a first end marginal region 12 overlapping a second end marginal region 14 to form an overlap region ready for a seam forming operation. The flexible member 10 can be utilized within an electrophotographic imaging device and may be a single film substrate member or a member having a film substrate layer combined with one or more additional coating layers. At least one of the coating layers comprises a film forming binder.

The flexible member 10 may be a single layer or comprise multiple layers. If the flexible member 10 is to be a negatively charged photoreceptor device, the flexible member 10 may comprise a charge generator layer sandwiched between a conductive surface and a charge transport layer. Alternatively, if the flexible member 10 is to be a positively charged photoreceptor device, the flexible member 10 may comprise a charge transport layer sandwiched between a conductive surface and a charge generator layer.

The layers of the flexible member 10 can comprise numerous suitable materials having suitable mechanical properties. Examples of typical layers are described in U.S. Pat. No. 4,786,570, U.S. Pat. No. 4,937,117 and U.S. Pat. No. 5,021,309, the entire disclosures thereof being incorporated herein by reference. The flexible member 10 shown in Figure 1, including each end marginal region 13 and 14, comprises from top to bottom a charge transport layer 16 (e.g., 24 micrometers thick), a generator layer 18 (e.g., 1 micrometer thick), an interface layer 20 (e.g., 0.05 micrometer thick), a blocking layer 22 (e.g., 0.04 micrometer thick), a conductive ground plane layer 24 (e.g., 0.02 micrometer thick, a supporting layer 26 (e.g., 76.2 micrometer thick), and an anti-curl back coating layer 28 (e.g., 14 micrometer thick). It should be understood that the thickness of the layers are for purposes of illustration only and that a wide range of thicknesses can be used for each of the layers.

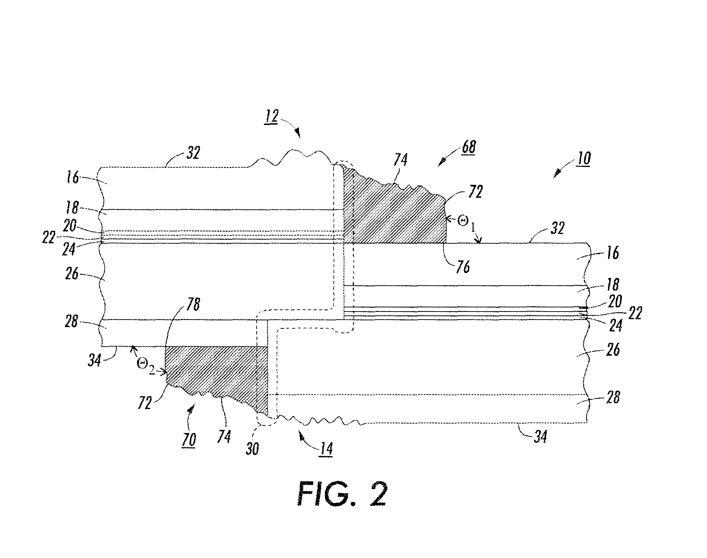

The end marginal regions 12 and 14 can be joined by any suitable means including gluing, taping, stapling, pressure and heat fusing to form a continuous member such as a belt, sleeve, or cylinder. Both heat and pressure can be used to bond the end marginal regions 12 and 14 into a seam 30 in the overlap region as illustrated in Figure 2. The flexible member 10 is thus transformed from a sheet of electrophotographic imaging material as illustrated in Figure 1 into a continuous electrophotographic imaging belt as illustrated in Figure 2. The flexible member 10 has a first exterior major surface or side 32 and a second exterior major surface or side 34 on the opposite side. The seam 30 joins the flexible member 10 so that the bottom surface 34 (generally including at least one layer immediately above) at and/or near the first end marginal region 12 is integral with the top surface 32 (generally including at east one layer immediately below) at and/or near the second end marginal region 14.

A heat and pressure joining means includes ultrasonic welding to transform the sheet of photoconductive imaging material into a photoreceptor belt. The belt can be fabricated by ultrasonic welding of the overlapped opposite end regions of a sheet. In the ultrasonic seam welding process, ultrasonic energy applied to the overlap region is used to melt suitable layers such as the charge transport layer 16, generator layer 18, interface layer 20, blocking layer 22, part of the support layer 26 and/or anti-curl back coating layer 28. Direct fusing of the support layer achieves optimum seam strength.

Ultrasonic welding may be the method chosen for joining a flexible imaging member because it is rapid, clean and solvent-free and low cost, as well as because it produces a thin and narrow seam. In addition, ultrasonic welding may be used because the mechanical high frequency pounding of the welding horn causes generation of heat at the contiguous overlapping end marginal regions of the flexible imaging sheet loop to maximize melting of one or more layers therein to form a strong and precisely defined seam joint. The melting of the coating layers of the photoconductive sheet provides direct substrate to substrate contact of the opposite ends and fusing them into a seam. Fro example, ultrasonic welding and an apparatus for performing the same is disclosed in U.S. Patent No. 4,532,166, which is hereby incorporated by reference.

Ultrasonic welding is a process that uses high frequency mechanical vibrations above the audible range. The vibrations are produced at the tip of a welding sonotrode or horn. The vibratory force emanating from such a horn device can be generated at high enough frequencies to soften or melt thermoplastic material components intended to be joined together. For example, such frequencies can be effective at 20, 30 or 40 kHz. One of the main advantages of ultrasonic welding may be found in the very short welding steps that enhance its usefulness even in mass production. Weld times may last less than a second.

However, the completed welded seam may contain upper and lower splashings at each end of the overlapped region. The splashings are formed in the process of joining the end marginal regions together. Molten material is necessarily ejected from either side of the overlap region to facilitate direct support layer to support layer fusing and results in the formation of the splashings. The splashings generally form bumps or protrusions above and below the seam area of the welded flexible electrophotographic imaging member. The bumps or protrusions of the splashings are undesirable for many machines such as electrophotographic copiers, duplicators and copiers that require precise edge positioning of a flexible electrophotographic imaging member during machine operation. For example, the existence of the bumps or protrusions can create image defects if that area of the belt is used in an imaging operation, or that area of the belt must be avoided in imaging operations, requiring additional system control. The irregular surface topology of the overlap seam also makes it difficult for the cleaner blade to clean toner around the seam. This profile can cause damage to the cleaner blades by nicking the cleaning edge of the blade. The toner trapping from the poor cleaning and the blade damage results in streaking from the seam and creates an image quality problem. A few manners of addressing these problems are disclosed in U.S. Application Serial No. 11/211,752 filed August 26, 2005, and U.S. Application Serial No. 11/155, 672 filed June 20, 2005, which are hereby incorporated by reference in their entirety.

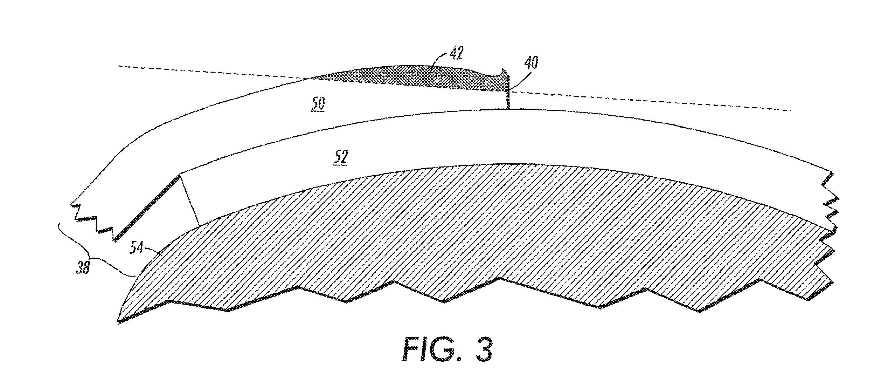

As shown in Figure 3, a seamed belt 38 has an overlap seam 40 comprising an overlap layer 50 and an underlap layer 52. The seam 40 has an irregular surface topology. As discussed above, the irregular peaks and protrusions cause numerous problems in machine operation. In order to provide a smooth seamed belt, it is desired that the bumps or protrusions, or splashings, are removed or at least their size and impact minimized.

The present embodiments provide methods for removing the surface roughness of the overlap seam to produce a smooth surface. To smooth out and significantly remove the undesired roughness of the overlap seam 40, the present embodiments heat and compress the undesired protruding material 42 to smooth away the protrusions 42 that make the surface irregular. Furthermore, through compression and/or reformation of the protrusions 42, no material is removed and thus no waste is generated. In embodiments, the belt 38 may be held in place by vacuum on an anvil 54 during the post treatment smoothing process.

In embodiments, there is provided processes for post treatment of a seamed flexible belt, for example, an ultrasonically welded seamed flexible imaging member belt. The flexible belt has a welded seam extending from one parallel edge to the other parallel edge, and the welded seam further has a rough seam region comprising an overlap of two opposite edges. As discussed, the roughness is caused by material protrusions or splashings that result from the welding process. The flexible belt is positioned on a lower anvil such that the flexible belt is held in position on the lower anvil by vacuum. A heat and pressure applying tool is used to contact the rough seam region such that the tool applies heat and pressure and smoothes out the rough seam region in a manner to produce a flexible belt having a smooth welded seam. Because no material is removed, but rather reformed, there is no waste generated and contamination of process equipment is substantially reduced. Furthermore, because no seam material is removed, the strength of the welded seam is maintained and not degraded.

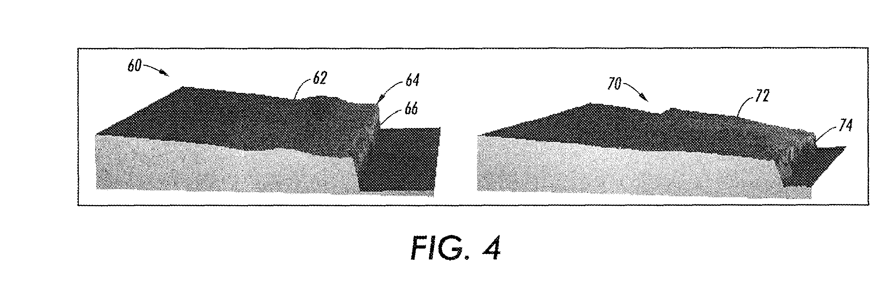

In a specific embodiment, the heat and pressure applying tool is an ultrasonic vibrating horn. In such embodiment, the lower anvil may be a flat anvil. The process smoothes out the rough seam region by making a second welding pass across the welded region such that the rough seam region is further compressed under high pressure and heat. Because the post treatment smoothing process uses the welding horn to further compress the overlap, rather than removing the protruding material, seam strength is not degraded. Moreover, the welded seam may be double welded from the back side of the seam as well. In such embodiments, the second welding pass is made with the seam inverted on the anvil so that the imaging side of the belt is facing down on the anvil. In this manner, the overlap step on the image side of the belt can be substantially eliminated as it conforms to the smooth surface of the anvil. Figure 4 provides a three-dimensional comparison of the ultrasonically welded seam before (left) and after (right) being subjected to the double-welding post treatment smoothing process. Seamed belt 60 has not been subjected to the post treatment smoothing process. As can be clearly seen from the three-dimensional topographical image, the overlap 62 has an irregular surface topology with sharp protrusions 64 at the seam 66. Seamed belt 70 that has been post-treated with the smoothing process according to the present embodiments. It can be seen that the process substantially smoothes out the irregular surface topology. The overlap 72 has been smoothed out and any sharp protrusions at the seam 74 have been substantially eliminated. The degree to which the seam is double welded is a function of bellows pressure, amplitude, traverse speed, fly height and horn configuration.

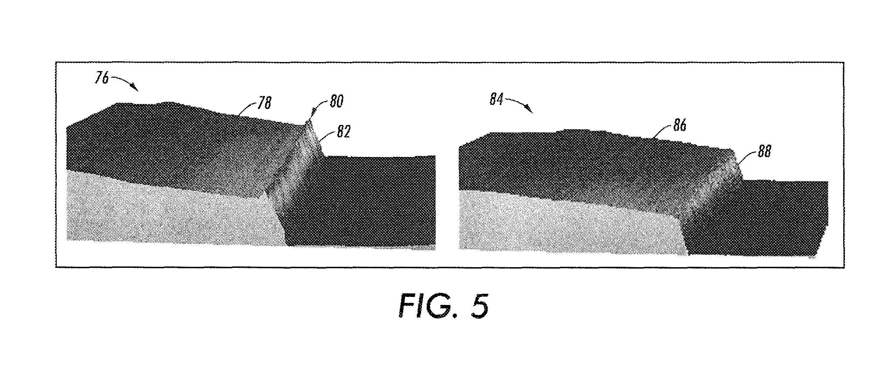

In other specific embodiments, the heat and pressure applying tool is selected from the group consisting of an automated heated pressure roller and a heated upper anvil. In such embodiments, the lower anvil is a round anvil and an edge of the seam region lies on an apex of the lower anvil. In one embodiment, the process smoothes out the rough seam region by traversing the automated heated pressure roller along the seam to reform the edge of the seam region. The heated pressure roller applies pressure on the welded seam against the lower anvil while heating the seam such that a smooth welded seam is produced. The belt is to be held in place by vacuum on the lower anvil while the heated pressure roller traverses the seam. To effectively heat roll the seam smooth, the positioning of the roller to the seam is positioned so as to lie on the apex of the anvil to fully expose the area to be smoothed. The surface of the roller should be tangent to the anvil's apex. Using a round anvil allows heat and pressure to be concentrated along the edge of the overlap. In further embodiments, the heated pressure roller is used in an automated system where the heated roller is affixed to a linear actuator which drives it tangent to the roller's apex along its length. Temperature may be controlled by means of a thermostat controller while pressure may be controlled by spring tension. Figure 5 provides a three-dimensional comparison of the ultrasonically welded seam before (left) and after (right) being subjected to the heated roller post treatment smoothing process. Seamed belt 76 has not been subjected to the post treatment smoothing process. As can be clearly seen from the three-dimensional topographical image, the overlap 78 has an irregular surface topology with sharp protrusions 80 at the seam 82. Seamed belt 84 that has been post-treated with the smoothing process according to the present embodiments. It can be seen that the process substantially smoothes out the irregular surface topology. The overlap 86 has been smoothed out and any sharp protrusions at the seam 88 have been substantially eliminated. The degree to which the seam is smoothed is a function of pressure, temperature, traverse speed, and contact area.

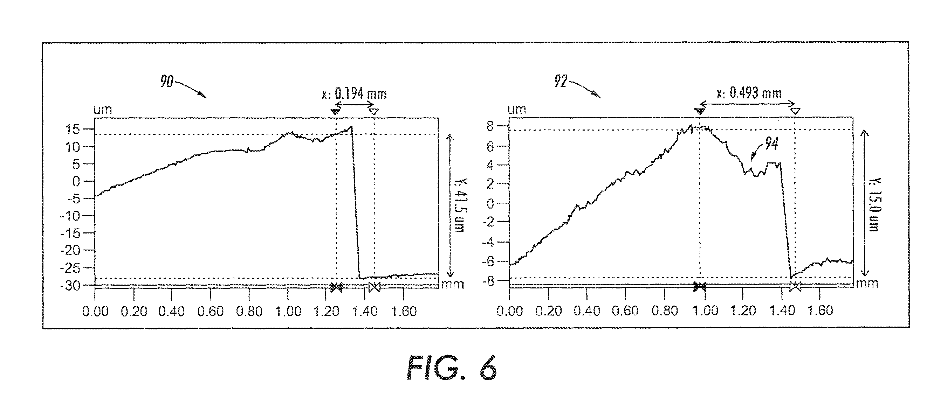

In another embodiment, the process smoothes out the rough seam region by applying the heated upper anvil to the edge of the seam region such that the welded seam is sandwiched between the upper and lower anvils. The welded seam is thus compressed under high pressure. Both the upper and lower anvils may be heated so that during the compression, the seam material is also heated close to its glass transition temperature to further facilitate the reformation of the welded seam and to produce a smooth welded seam. The upper and lower anvils may be heated by heating components embedded in the upper and lower anvils and which are controlled by a thermostatic controller. In this embodiment, welded seam may be reduced in seam thickness by from about 25 percent to about 35 percent. Figure 6 provides a graphical comparison of the ultrasonically welded seam before (left) and after (right) being subjected to the compression post treatment smoothing process. As can be clearly seen from the graphical representation, the seamed belt after treatment 92 shows a significant reduction 94 in step height as compared to the seamed belt prior to treatment 90. It can be seen that the process substantially smoothes out the irregular surface topology.

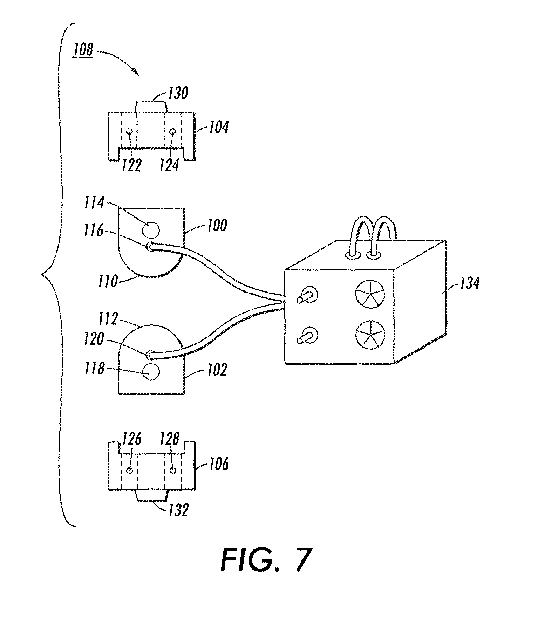

In embodiments, the compression is facilitated by an apparatus comprising the upper and lower anvils controlled by the thermostatic controller, and a hydraulic cantilevered press break to compress the upper anvil and lower anvil together. The upper and lower anvils are compressed together using a hydraulic cantilevered press break at up to 20,000 lbs/lin. The hydraulic cantilevered press break has hard stops to control reduction of the seam thickness. The apparatus is configured to withstand extreme pressures and while being precise enough to reduce seam thickness uniformly down to a micron range. The apparatus comprises two major portions: the precision-machined upper and lower anvils and upper and lower bases which provide strength and support to the apparatus. Figure 7 shows a cross-sectional view of the apparatus configuration 108. The rounded edges of the upper anvil 100 and the lower anvil 102 focus the heat and pressure to a narrow landing zone 110, 112 on which the seam is centered. Heaters 114, 118 and temperature probes 116, 120 are positioned lengthwise down the center of the upper and lower anvils 100, 102. Power is supplied via a remote thermostatic controller 134. Upper and lower bases may have tabs 130, 132 on the bases 104, 106, which are used to locate the apparatus 108 in the break. Guide pins 122, 124, 126, 228 on either side of the anvils 100, 102 assure proper alignment and allow for the placement of hard stop collars to gauge resulting seam thickness.

The present embodiments also include ultrasonically welded seamed flexible belts formed by the processes described above. The resulting belts have improved seam surface topology and can withstand greater dynamic fatigue conditions. In addition, the present embodiments may be automated such that the processes can be run more efficiently and consistently to form the desired smooth seamed flexible belts.

The embodiments may be used to produce a flexible belt selected from the group consisting of a photoreceptor, an electroreceptor, and an intermediate image transfer belt. The flexible belt may consist of a single layer of substantially homogeneous material or may comprise at least two different layers having different compositions or properties. The present embodiments may be used on other welded seams, puzzle-cut seams and taped seams and are applicable across all machine platforms whether xerographic systems utilizing tandem or belt designs. The embodiments may also be applied to seams in various seamed belt members, such as for example, a photoreceptor, an electroreceptor, an intermediate image transfer belt, and the like.

While the description above refers to particular embodiments, it will be understood that many modifications may be made without departing from the spirit thereof. The accompanying claims are intended to cover such modifications as would fall within the true scope and spirit of embodiments herein.

## Claims

1. A process for post treatment of an ultrasonically welded seamed flexible imaging member belt comprising:
providing a flexible belt having a welded seam extending from one parallel edge to the other parallel edge, the welded seam having a rough seam region comprising an overlap of two opposite edges;
positioning the flexible belt on a lower anvil such that the flexible belt is held in position on the lower anvil by vacuum;
contacting the rough seam region with a heat and pressure applying tool; and
smoothing out the rough seam region with heat and pressure applied by the heat and pressure applying tool to produce a flexible belt having a smooth welded seam without removing seam material.

2. The process of claim 1 adapted to smooth out the rough seam region without removing seam material such that contamination is substantially reduced.

3. The process of claim 1 adapted to smooth out the rough seam region without
removing seam material such that seam strength is maintained.

4. The process of claim 1, wherein the heat and pressure applying tool is
selected from the group consisting of an automated heated pressure roller and a heated upper anvil.

5. The process of claim 4, wherein the lower anvil is a round anvil and an edge of the seam region lies on an apex of the lower anvil.

6. The process of claim 4, wherein the smoothing out of the rough seam region is
performed by traversing the automated heated pressure roller along the seam to reform the edge of the seam region such that a smooth welded seam is produced.

7. The process of claim 6, wherein the heat is controlled by a thermostat controller and the pressure is controlled by spring tension.

8. The process of claim 4, wherein the smoothing out of the rough seam region is performed by applying the heated upper anvil to the edge of the seam region such that the welded seam is compressed under high pressure and heated close to a glass transition temperature of the seam material such that a smooth welded seam is produced.

9. The process of claim 8, wherein the lower anvil is heated.

10. The process of claim 9, wherein the upper and lower anvils are heated by heating components embedded in the upper and lower anvils and which are controlled by a thermostatic controller.

11. The process of claim 8, wherein the welded seam is reduced in seam thickness by from about 25 percent to about 35 percent.

12. The process of claim 8, wherein the upper and lower anvils are compressed together by a hydraulic cantilevered press break having hard stops to control reduction of the seam thickness.

13. A process for post treatment of an ultrasonically welded seamed flexible imaging member belt comprising:
providing a flexible belt having a welded seam extending from one parallel edge to the other parallel edge, the welded seam having a rough seam region comprising an overlap of two opposite edges;
positioning the flexible belt on a lower anvil such that the flexible belt is held in position on the lower anvil by vacuum;
contacting the rough seam region with a heat and pressure applying tool, the heat and pressure applying tool being selected from the group consisting of an ultrasonic vibrating hom, an automated heated pressure roller and a heated upper anvil; and
smoothing out the rough seam region with heat and pressure to produce a flexible belt having a smooth welded seam without removing seam material.

14. The process of claim 13 being automated.
